# EUROPEAN PATENT APPLICATION

(11) **EP 4 471 529 A1**
(43) Date of publication of application: **04.12.2024**
(21) Application number: 24177023.9
(22) Date of filing: 21.05.2024
(51) Int. Cl.: G05D 1/24

(54) **CONTROL DEVICE AND CONTROL METHOD**

(30) Priority: 31.05.2023 JP 2023089980; 19.01.2024 JP 2024006558
(71) Applicant: TOYOTA JIDOSHA KABUSHIKI KAISHA, Toyota-shi, Aichi-ken, 471-8571 (JP)
(72) Inventor: INOUE, Go, Toyota-shi 471-8571 (JP); IWAZAKI, Noritsugu, Toyota-shi 471-8571 (JP); KANOU, Takeshi, Toyota-shi 471-8571 (JP); OKAMOTO, Yuki, Toyota-shi 471-8571 (JP); WATANABE, Yoshinori, Toyota-shi 471-8571 (JP); YOKOYAMA, Daiki, Toyota-shi 471-8571 (JP); SAWANO, Takuro, Toyota-shi 471-8571 (JP); IWAHORI, Kento, Toyota-shi 471-8571 (JP); HATANO, Yasuyoshi, Toyota-shi 471-8571 (JP); IKEDA, Keigo, Toyota-shi 471-8571 (JP); YASUYAMA, Shogo, Toyota-shi 471-8571 (JP); KATOU, Jyunya, Toyota-shi 471-0856 (JP)
(74) Representative: J A Kemp LLP

(57) **Abstract**

A control device includes: an information acquisition unit configured to acquire a first information and a second information, wherein the first information is stored in a first storage unit, wherein the first storage unit is located in a moving object operable by unmanned driving, wherein the first information includes at least one of operation history of the moving object and a feature of the moving object, wherein the second information is stored in a second storage unit, wherein the second storage unit is located outside the moving object, wherein the second information includes at least one of operation history of the moving object and a feature of the moving object; a comparison unit configured to compare the first information with the second information; and a control unit configured to perform different processes regarding the moving object depending on whether or not the first information matches the second information.

## Description

### CROSS REFERENCE TO RELATED APPLICATIONS

The patent application claims the priority based on Japanese Patent Applications No. 2023-089980 filed on May 31, 2023, and No. 2024-006558 filed on January 19, 2024, the disclosure of which are hereby incorporated by reference in their entireties.

### BACKGROUND

### FIELD

The present disclosure relates to a control device and a control method.

There is a known technology for confirming whether or not an intended vehicle is remotely controlled by transmitting a command to move vehicle wipers and the like by remote control, and observing whether or not the vehicle wipers and the like move in response to the command (for example, U.S. Patent No. 10532771 B2).

In the technology described above, if a target vehicle and a non-target vehicle perform the same operation at the same time, there is a possibility of error in determining whether or not the intended target vehicle is being controlled.

### SUMMARY

The present disclosure may be realized by the following aspects.
(1) According to a first aspect of the present disclosure, a control device is provided. The control device comprises: an information acquisition unit configured to acquire a first information and a second information, wherein the first information is stored in a first storage unit, wherein the first storage unit is located in a moving object operable by unmanned driving, wherein the first information includes at least one of operation history of the moving object and a feature of the moving object, wherein the second information is stored in a second storage unit, wherein the second storage unit is located outside the moving object, wherein the second information includes at least one of operation history of the moving object and a feature of the moving object; a comparison unit configured to compare the first information with the second information; and a control unit configured to perform different processes regarding the moving object depending on whether or not the first information matches the second information.
   The control device according to this aspect is capable of determining whether or not an intended target is controlled by comparing the first information with the second information. Therefore, it is possible to suppress errors in determining whether or not the intended target is controlled.
(2) In the control device according to the aspect described above, when the first information and the second information do not match, the control unit may perform at least one of a process of notifying occurrence of abnormality, a process of changing a speed of the moving object, and a process of stopping unmanned driving of the moving object.
   The control device according to this aspect is capable of taking appropriate actions when an unintended target is being controlled.
(3) In the control device according to the aspect described above, the moving object may act according to a control commands received from outside the moving object, and the first information and the second information may include history of the control commands transmitted to the moving object.
   The control device according to this aspect is capable of determining whether or not the intended target is controlled using the control commands accumulated by controlling a moving object.
(4) In the control device according to the aspect described above, the first information and the second information may include at least one of an exterior feature of the moving object and a performance feature of the moving object.
   The control device according to this aspect is capable of determining whether or not the intended target is controlled using the exterior feature and the performance feature of each moving object.
(5) According to a second aspect of the present disclosure, a control method is provided. The control method comprises: acquiring a first information and a second information, wherein the first information is stored in a first storage unit, wherein the first storage unit is located in a moving object operable by unmanned driving, wherein the first information includes at least one of operation history of the moving object and a feature of the moving object, wherein the second information is stored in a second storage unit, wherein the second storage unit is located outside the moving object, wherein the second information includes at least one of operation history of the moving object and a feature of the moving object; comparing the first information with the second information; and performing different processes regarding the moving object depending on whether or not the first information matches the second information.

The control method according to this aspect is capable of determining whether or not an intended target is controlled by comparing the first information with the second information. Therefore, it is possible to suppress errors in determining whether or not the intended target is controlled.

The present disclosure may also be implemented in various aspects other than control devices and control methods. For example, the present disclosure may also be implemented in aspects including an unmanned driving system, a moving object, a method for producing a moving object, a vehicle, a method for producing a vehicle, a computer program, a storage medium storing a computer program, and the like.

### BRIEF DESCRIPTION OF THE DRAWINGS

Fig. 1 is an explanatory view of a structure of an unmanned driving system of a first embodiment;
Fig. 2 is an explanatory view of a structure of a vehicle of the first embodiment;
Fig. 3A is an explanatory view of a state in which a vehicle moves by remote control in a factory;
Fig. 3B is a flowchart of procedures in the process of running control of a vehicle of the first embodiment;
Fig. 4 is a flowchart of contents of a confirmation process of the first embodiment;
Fig. 5 is a flowchart of contents of an information transmission process of the first embodiment;
Fig. 6 is an explanatory view of a state in which a remote control device performs transmission and reception of information;
Fig. 7 is an explanatory view of a structure of an unmanned driving system of a second embodiment;
Fig. 8 is an explanatory view of a structure of a vehicle of the second embodiment;
Fig. 9 is a flowchart of procedures in the process of running control of a vehicle of the second embodiment;
Fig. 10 is a flowchart of contents of an information transmission process of the second embodiment; and
Fig. 11 is a flowchart of contents of a confirmation process of the second embodiment.

### DETAILED DESCRIPTION

### A. First Embodiment

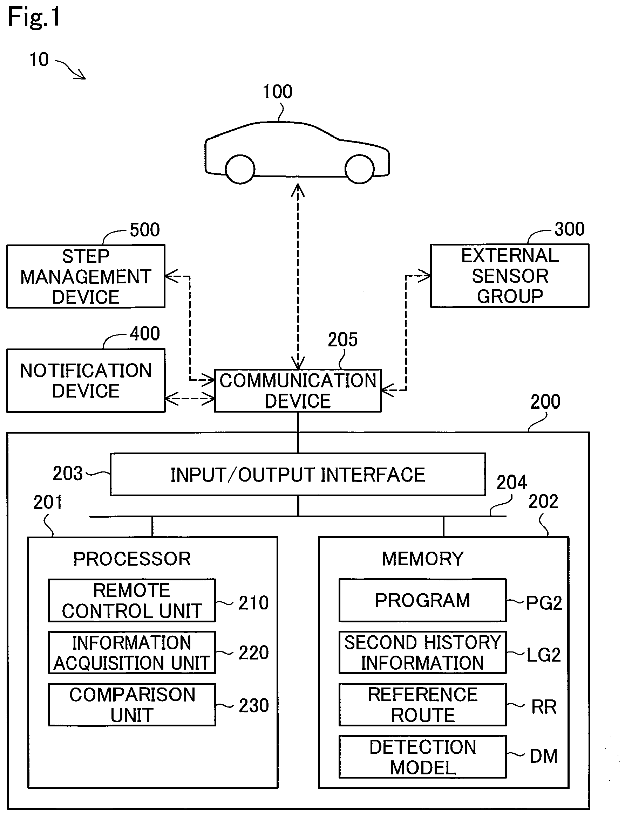

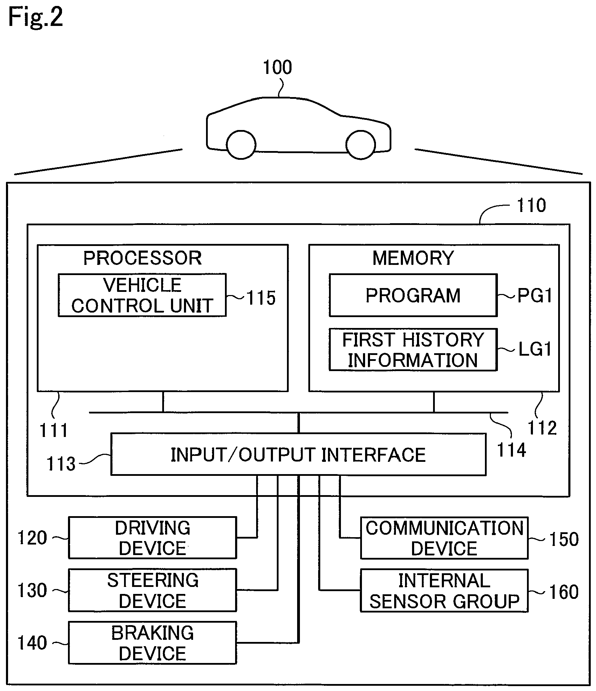

Fig. 1 is an explanatory view of a structure of an unmanned driving system 10 according to the first embodiment. Fig. 2 is an explanatory view of a structure of a vehicle 100 according to the first embodiment. The unmanned driving system 10 is used to move a moving object by unmanned driving. In the present embodiment, the unmanned driving system 10 is used in a factory for producing moving objects in order to move the moving objects by unmanned driving. Note that, the unmanned driving system 10 may be used to move moving objects by unmanned driving not only in factories where moving objects are produced, but also, for example, in commercial facilities, universities, parks, and the like.

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a track, a bus, a two-wheel vehicle, a four-wheel vehicle, a construction vehicle, or a combat vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

As shown in Fig. 1, in the present embodiment, the unmanned driving system 10 includes at least one vehicle 100, a remote control device 200, an external sensor group 300 provided in a factory, a notification device 400 for reporting occurrence of abnormality in the factory, and a step management device 500 for managing the production steps of the vehicle 100 in the factory. The remote control device 200 may also be simply referred to as a control device. In the present embodiment, the remote control device 200 corresponds to the "control device" of the present disclosure.

As shown in Fig. 2, in the present embodiment, the vehicle 100 is an electric vehicle configured to be operable by remote control. The vehicle 100 includes a vehicle control device 110 for controlling respective sections of the vehicle 100, a driving device 120 for accelerating the vehicle 100, a steering device 130 for changing the traveling direction of the vehicle 100, a braking device 140 for decelerating the vehicle 100, a communication device 150 for enabling communication with the remote control device 200 via wireless communication, and an internal sensor group 160. In the present embodiment, the driving device 120 includes a battery, a driving motor driven by electric power of the battery, and driving wheels rotated by the driving motor. The internal sensor group 160 is constituted of at least one internal sensor. The internal sensor is a sensor mounted on the vehicle 100. The internal sensor includes, for example, a rotation count sensor for measuring rotation count of the driving motor, an acceleration sensor for measuring acceleration of the vehicle 100, a vehicle speed sensor for measuring speed of the vehicle 100, and a yaw rate sensor for measuring yaw axis angular velocity (yaw rate) of the vehicle 100.

The vehicle control device 110 is constituted of a computer with a processor 111, a memory 112, an input/output interface 113, and an internal bus 114. The processor 111, the memory 112, and the input/output interface 113 are connected via the internal bus 114 to enable bidirectional communication. The input/output interface 113 is connected to the driving device 120, the steering device 130, the braking device 140, the communication device 150, and the internal sensor group 160. A computer program PG1 is stored in the memory 112.

The processor 111 functions as a vehicle control unit 115 by executing the computer program PG1. The vehicle control unit 115 controls the driving device 120, the steering device 130, and the braking device 140. When the vehicle 100 has a driver, the vehicle control unit 115 is capable of enabling the vehicle 100 to run by controlling the driving device 120, the steering device 130, and the braking device 140 in response to operations by the driver. The vehicle control unit 115 is capable of enabling the vehicle 100 to run by controlling the driving device 120, the steering device 130, and the braking device 140 in response to control commands transmitted from the remote control device 200, regardless of whether or not the vehicle 100 has a driver. The vehicle control unit 115 stores information regarding operation history of the vehicle 100 in the memory 112. In the following description, the information regarding the operation history of the vehicle 100 stored in the memory 112 is referred to as a first history information LG1. In the present embodiment, the vehicle control unit 115 stores control commands received from the remote control device 200 in the memory 112, together with the time of the reception of the control command. That is, in the present embodiment, the first history information LG1 includes a control command received from the remote control device 200 and the time of the reception of the control command. In the present embodiment, the memory 112 corresponds to a "first storage unit" of the present disclosure, and the first history information LG1 corresponds to a "first authentication information" of the present disclosure.

As shown in Fig. 1, the remote control device 200 is constituted of a computer with a processor 201, a memory 202, an input/output interface 203, and an internal bus 204. The processor 201, the memory 202, and the input/output interface 203 are connected via the internal bus 204 to enable bidirectional communication. The input/output interface 203 is connected to a communication device 205 for enabling communication with the vehicle 100 via wireless communication. In the present embodiment, the communication device 205 is capable of communication with the external sensor group 300, the notification device 400, and the step management device 500 via wired or wireless communication. A computer program PG2 is stored in the memory 202.

The processor 201 functions as a remote control unit 210, an information acquisition unit 220, and a comparison unit 230 by executing the computer program PG2. The remote control unit 210 transmits to the vehicle 100 control commands to enable remote control of the moving state of the vehicle 100, thereby causing the vehicle 100 to run. In the present embodiment, the remote control unit 210 stores information regarding the operation history of the vehicle 100 in the memory 202. In the following description, the information regarding the operation history of the vehicle 100 stored in the memory 202 is referred to as a second history information LG2. In the present embodiment, the remote control unit 210 stores contents of the control command transmitted to the vehicle 100 in the memory 202, together with the time of the transmission of the control command. That is, in the present embodiment, the second history information LG2 includes the control command transmitted to the vehicle 100 and the time of the transmission of the control command. The information acquisition unit 220 acquires the first history information LG1 stored in the memory 112 of the vehicle control device 110 and the second history information LG2 stored in the memory 202 of the remote control device 200. The comparison unit 230 compares the first history information LG1 with the second history information LG2 to determine if they match each other. The remote control unit 210 may also be simply referred to as a control unit. In the present embodiment, the memory 202 corresponds to a "second storage unit" of the present disclosure, and the second history information LG2 corresponds to a "second authentication information" of the present disclosure.

The external sensor group 300 is constituted of at least one external sensor. The external sensor is a sensor provided outside the vehicle 100. In the present embodiment, the external sensor group 300 is constituted of a plurality of cameras provided in the factory. Each camera is equipped with a communication device (not shown), and is capable of communication with the remote control device 200 via wired or wireless communication.

The notification device 400 is a device for notifying the administrator of the unmanned driving system 10 and workers in the factory of occurrence of abnormality in the factory. In the following description, the administrator of the unmanned driving system 10 and the workers in the factory are referred to as "administrator and the like". The notification device 400 is, for example, a warning buzzer provided in the factory or a warning lamp provided in the factory. The notification device 400 may be a tablet terminal carried by the administrator and the like. The notification device 400 is equipped with a communication device (not shown), and is capable of communication with the remote control device 200 via wired or wireless communication.

The step management device 500 is a device for managing the production steps of the vehicle 100 in a factory. The step management device 500 is constituted of at least one computer. The step management device 500 is equipped with a communication device (not shown), and is capable of communication with the remote control device 200 and various facilities in the factory via wired or wireless communication. By communicating with various facilities in the factory, the step management device 500 determines the time, the place, the person in charge, and the type of the work scheduled to be performed while identifying the vehicle 100 subjected to the work, as well as the time, the place, the person in charge, and the type of the work that has already been performed while identifying the vehicle 100 that has been through the work. In the present embodiment, the step management device 500 is capable of identifying each vehicle 100 using a vehicle identification number (VIN: Vehicle Identification Number) that is unique to each vehicle 100.

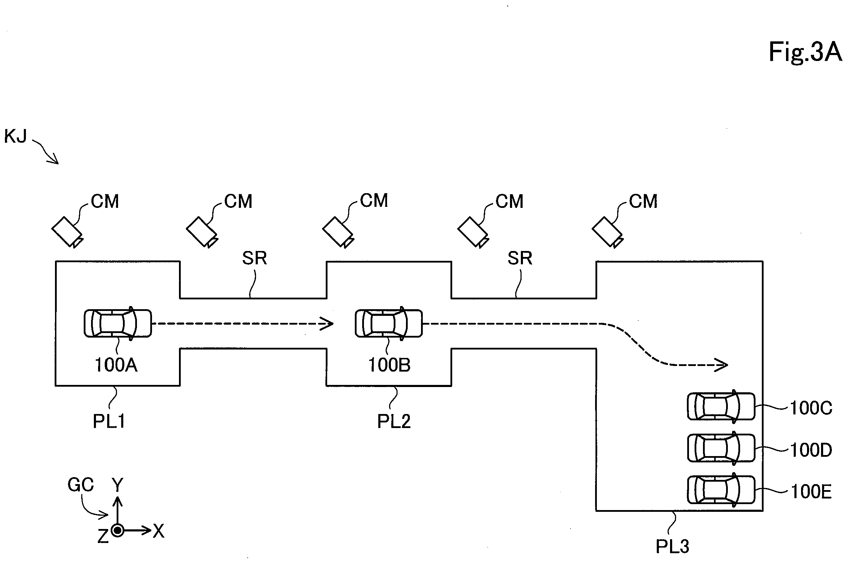

Fig. 3A is an explanatory view of a state in which the vehicle 100 moves by remote control in a factory KJ. Fig. 3A illustrates five vehicles 100A to 100E. In the following description, when the five vehicles 100A to 100E are described without being distinguished from one another, the vehicles 100A to 100E will be simply referred to as the vehicle 100. In the present embodiment, the factory KJ has a first place PL1 for conducting assembly of the vehicle 100, a second place PL2 for conducting inspections of the vehicle 100, and a third place PL3 for storing the vehicle 100 that has passed the inspections. The first place PL1, the second place PL2, and the third place PL3 are connected by a track SR on which the vehicle 100 can run.

The vehicle 100 assembled in the first place PL1 is equipped with the vehicle control device 110, the driving device 120, the steering device 130, the braking device 140, the communication device 150, and the internal sensor group 160. The vehicle 100 assembled in the first place PL1 runs from the first place PL1 to the second place PL2 by remote control by the remote control device 200. The vehicle 100 that has passed the inspections at the second place PL2 runs from the second place PL2 to the third place PL3 by remote control by the remote control device 200. The vehicle 100 is then shipped from the factory KJ.

The following provides a description of a method of causing the vehicle 100 to move by remote control using the remote control unit 210. The remote control unit 210 determines a target route for allowing the vehicle 100 to run to its destination along the track SR. The target route here refers to a reference route RR, which is described later. The factory KJ is equipped with a plurality of cameras CM that capture images of the track SR, and the remote control unit 210 can acquire the relative position and orientation of the vehicle 100 relative to the target route in real time by analyzing the video images captured by each of the cameras CM. In the present embodiment, each camera CM is included in the external sensor group 300 described above. The remote control unit 210 generates control commands for causing the vehicle 100 to run along the target route, and transmits the control commands to the vehicle 100. The control commands here refer to running control signals, which are described later. The vehicle control device 110 mounted on the vehicle 100 controls the driving device 120, the steering device 130, and the braking device 140 according to the received control commands, thereby causing the vehicle 100 to run. This allows the vehicle 100 to move without using transport devices, such as a crane, a conveyor, or the like.

In the present embodiment, the remote control unit 210 causes the plurality of vehicles 100A to 100E to run one by one by remote control. For example, after moving the vehicle 100B from the second place PL2 to the third place PL3 by remote control, the remote control unit 210 switches the remote control target from the vehicle 100B to the vehicle 100A, and causes the vehicle 100A to move from the first place PL1 to the second place PL2 by remote control. In the present embodiment, the remote control unit 210 is also capable of causing the plurality of vehicles 100A to 100E simultaneously and in parallel by remote control. For example, while moving the vehicle 100B from the second place PL2 to the third place PL3 by remote control, the remote control unit 210 is also capable of causing the vehicle 100A to move from the first place PL1 to the second place PL2 by remote control.

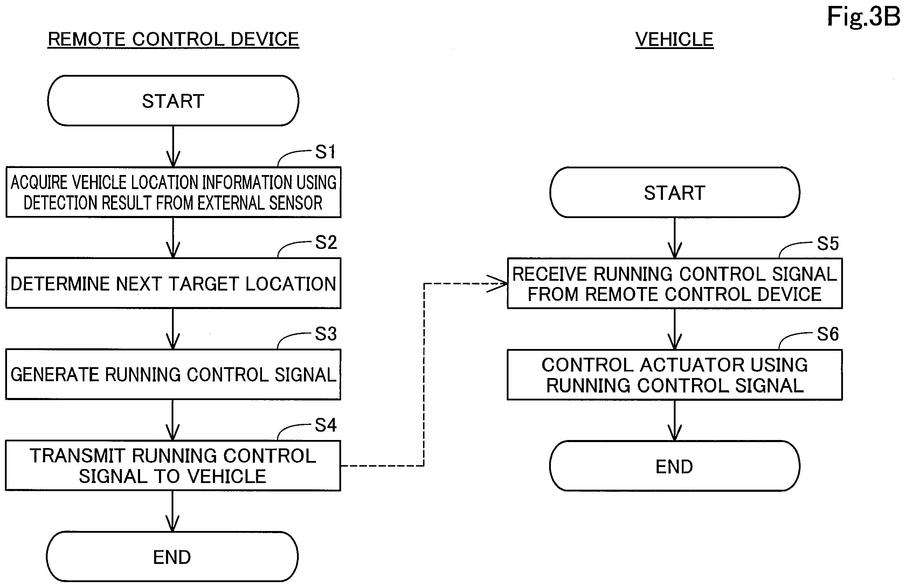

Fig. 3B is a flowchart of procedures in the process of running control of the vehicle 100 in the first embodiment. The step S1 to the step S4 are repeated by the processor 201 of the remote control device 200, and the step S5 to the step S6 are repeated by the processor 111 of the vehicle control device 110. In the step S1, the remote control device 200 acquires vehicle location information of the vehicle 100 using detection results output from the external sensor, which is a sensor located outside the vehicle 100. The vehicle location information is position information that serves as the basis for generating running control signals. In the present embodiment, the vehicle location information includes the position and orientation of the vehicle 100 in the reference coordinate system of the factory KJ. In the present embodiment, the reference coordinate system of the factory KJ is the global coordinate system GC, and any location in the factory KJ is expressed with X, Y, and Z coordinates in the global coordinate system GC. In the present embodiment, the external sensor is the camera CM, and the external sensor outputs a captured image as a detection result. That is, in the step S1, the remote control device 200 acquires the vehicle location information using captured images acquired from the camera CM, which is the external sensor.

More specifically, in step S1, the remote control device 200 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system GC, thereby acquiring the location of the vehicle 100. The outer shape of the vehicle 100 in the captured image may be detected by inputting the captured image to a detection model using artificial intelligence, for example. The detection model is prepared in the unmanned driving system 10 or outside the unmanned driving system 10. The detection model is stored in advance in the memory 202 of the remote control device 200, for example. An example of the detection model is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The remote control device 200 can acquire the orientation of the vehicle 100 through estimation based on the direction of a motion vector of the vehicle 100 detected from change in location of a feature point of the vehicle 100 between frames of the captured images using optical flow process, for example.

In step S2, the remote control device 200 determines a target location to which the vehicle 100 is to move next. In the present embodiment, the target location is expressed by X, Y, and Z coordinates in the global coordinate system GC. The memory 202 of the remote control device 200 contains the reference route RR stored in advance as a route along which the vehicle 100 is to run. The route is expressed by a node indicating a departure place, a node indicating a way point, a node indicating a destination, and a link connecting nodes to each other. The remote control device 200 determines the target location to which the vehicle 100 is to move next using the vehicle location information and the reference route RR. The remote control device 200 determines the target location on the reference route RR ahead of a current location of the vehicle 100.

In step S3, the remote control device 200 generates a running control signal for causing the vehicle 100 to run toward the determined target location. In the present embodiment, the running control signal includes an acceleration and a steering angle of the vehicle 100 as parameters. The remote control device 200 calculates a running speed of the vehicle 100 from transition of the location of the vehicle 100 and makes comparison between the calculated running speed and a target speed of the vehicle 100 determined in advance. If the running speed is lower than the target speed, the remote control device 200 generally determines an acceleration in such a manner as to accelerate the vehicle 100. If the running speed is higher than the target speed as, the remote control device 200 generally determines an acceleration in such a manner as to decelerate the vehicle 100. If the vehicle 100 is on the reference route RR, The remote control device 200 determines a steering angle and an acceleration in such a manner as to prevent the vehicle 100 from deviating from the reference route RR. If the vehicle 100 is not on the reference route RR, in other words, if the vehicle 100 deviates from the reference route RR, the remote control device 200 determines a steering angle and an acceleration in such a manner as to return the vehicle 100 to the reference route RR. In other embodiments, the running control signal may include the speed of the vehicle 100 as a parameter instead of or in addition to the acceleration of the vehicle 100.

In step S4, the remote control device 200 transmits the generated running control signal to the vehicle 100. The remote control device 200 repeats the acquisition of vehicle location information, the determination of a target location, the generation of a running control signal, the transmission of the running control signal, and others in a predetermined cycle.

In step S5, the vehicle control device 110 of the vehicle 100 receives the running control signal transmitted from the remote control device 200. In step S6, the vehicle control device 110 controls the driving device 120, the steering device 130, and the braking device 140 using the received running control signal, thereby causing the vehicle 100 to run at the acceleration and the steering angle indicated by the running control signal. The vehicle control device 110 repeats the reception of a running control signal and the control over the various devices 120 to 140 in a predetermined cycle.

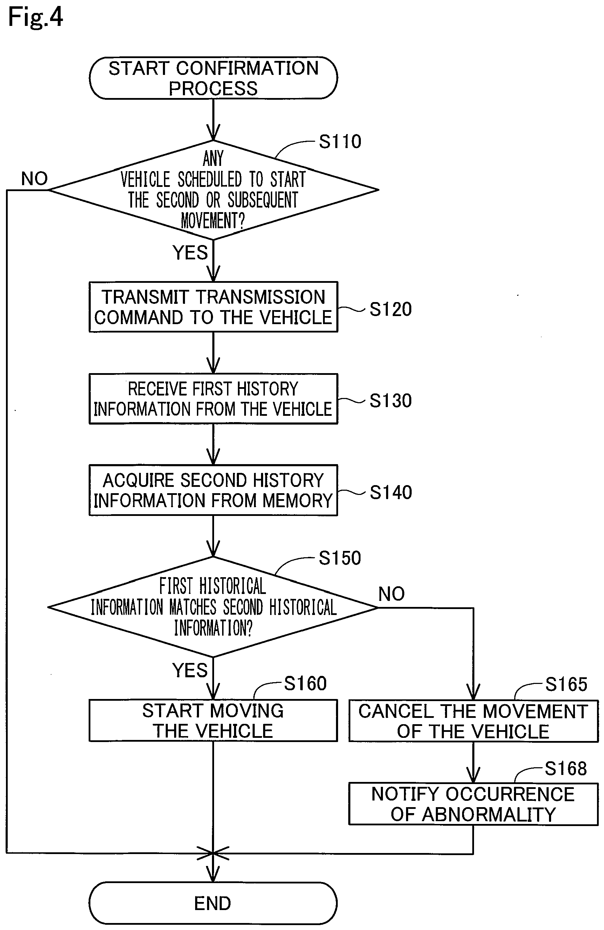

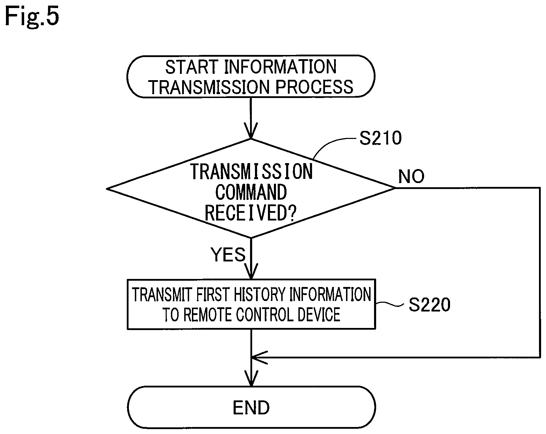

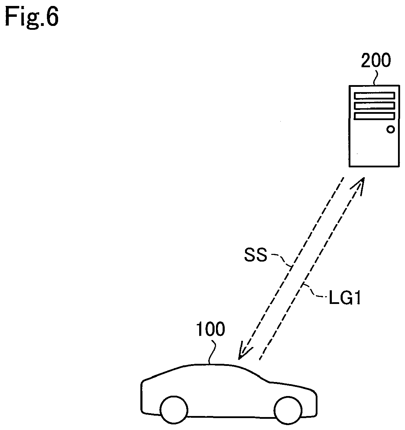

Fig. 4 is a flowchart of contents of a confirmation process performed in the remote control device 200. Fig. 5 is a flowchart of contents of an information transmission process performed in the vehicle 100. Fig. 6 is an explanatory view of a state in which the remote control device 200 performs transmission and reception of information. The following describes a control method performed in the unmanned driving system 10 with reference to Fig. 4 to Fig. 6.

The confirmation process shown in Fig. 4 is repeated by the processor 201 of the remote control device 200. When the confirmation process is started, in the step S110, the remote control unit 210 determines whether or not there is any vehicle 100 that is scheduled to start moving by the second or subsequent remote control. In the following description, the vehicle 100 that is scheduled to start moving by remote control for the second or subsequent time is referred to as a target vehicle 100. In the present embodiment, the target vehicle 100 is placed in a predetermined position with a predetermined orientation at a starting point provided in the first place PL1, the second place PL2, or the like in the factory KJ. In the movement at the first remote control, the target vehicle 100 moves from the starting point in the first place PL1 to the second place PL2. In the movement at the second remote control onward, the target vehicle 100 moves from the starting point in the second place PL2 to the third place PL3. When the remote control unit 210 receives, from the step management device 500, information indicating that the vehicle 100 is located at the starting point with the vehicle identification number of the vehicle 100 located at the starting point, as well as information indicating that the remote control movement of the vehicle 100 located at the starting point is the second time onward, the remote control unit 210 determines that the target vehicle 100 exists. If it is determined that there is no target vehicle 100 in the step S110, the remote control unit 210 skips the processes after the step S110 and ends the confirmation process.

If it is determined that there is a target vehicle 100 in the step S110, in the step S120, the remote control unit 210 transmits a control command to cause the target vehicle 100 to perform transmission of the first history information LG1 to the remote control device 200. In the following description, a control command to perform transmission of the first history information LG1 to the remote control device 200 is referred to as a transmission command.

In the step S130, the information acquisition unit 220 acquires the first history information LG1 transmitted from the target vehicle 100 in response to the transmission command. In the step S140, the information acquisition unit 220 acquires the second history information LG2 from the memory 202 of the remote control device 200. In the memory 202, the identification information of the vehicle 100 and the second history information LG2 are stored while being associated with each other. The information acquisition unit 220 searches for the second history information LG2 of the target vehicle 100 in the memory 202 using the identification information of the target vehicle 100 received from the step management device 500. The process in the step S140 may be performed between the step S110 and the step S130.

In the step S150, the comparison unit 230 compares the first history information LG1 with the second history information LG2 to determine if they match each other. In the present embodiment, if the control command received by the vehicle control device 110 within a predetermined period that is included in the first history information LG1 and the control command transmitted by the remote control device 200 within a predetermined period that is included in the second history information LG2 are identical, the comparison unit 230 determines that the first history information LG1 and the second history information LG2 match each other, and if the control command received by the vehicle control device 110 within a predetermined period that is included in the first history information LG1 and the control command transmitted by the remote control device 200 within a predetermined period that is included in the second history information LG2 are not identical, the comparison unit 230 determines that the first history information LG1 and the second history information LG2 do not match each other.

If it is determined in the step S150 that the first history information LG1 and the second history information LG2 match each other, the remote control unit 210 determines that the information acquisition unit 220 has acquired the first history information LG1 from the target vehicle 100, and starts moving the target vehicle 100 by remote control in the step S160. The remote control device 200 then completes the confirmation process.

If it is determined in the step S150 that the first history information LG1 and the second history information LG2 do not match each other, the remote control unit 210 determines that the information acquisition unit 220 has acquired the first history information LG1 from another vehicle 100 that is different from the target vehicle 100, and stops the remote control of the target vehicle 100 by cutting off the communication with the target vehicle 100 in step S165 to cancel the movement of the target vehicle 100 by remote control. In the step S168, the remote control unit 210 performs notification of the occurrence of abnormality using the notification device 400. The remote control device 200 then completes the confirmation process. The process in the step S168 may be performed between the step S150 and the step S165.

The information transmission process shown in Fig. 5 is repeated by the processor 111 of the vehicle control device 110. When the information transmission process is started, in the step S210, the vehicle control unit 115 determines whether or not a transmission command has been received from the remote control device 200. If it is not determined in the step S210 that the transmission command has been received from the remote control device 200, the vehicle control unit 115 skips the processes after the step S210 and ends the information transmission process. If it is determined in the step S210 that the transmission command has been received from the remote control device 200, in the step S220, the vehicle control unit 115 transmits the first history information LG1 stored in the memory 112 to the remote control device 200 in accordance with the transmission command. The vehicle control unit 115 then completes the information transmission process.

As shown in Fig. 6, as the confirmation process is performed, the transmission command SS is transmitted from the remote control device 200 to the vehicle 100, which is connected to the remote control device 200 via wireless communication. As the history information transmission process is performed, the first history information LG1 is transmitted to the remote control device 200 from the vehicle 100 that received the transmission command SS. The remote control device 200 reads out the second history information LG2 of the vehicle 100 located at the starting point from the memory 202. When the vehicle 100 connected to the remote control device 200 via wireless communication is the vehicle 100 located at the starting point, in other words, when remote control is being operated on the intended vehicle 100, the first history information LG1 and the second history information LG2 match with each other. In contrast, if the vehicle 100 connected to the remote control device 200 via wireless communication is not the vehicle 100 located at the starting point, in other words, when remote control is being operated on a vehicle 100 other than the intended vehicle 100, the first history information LG1 and the second history information LG2 do not match with each other.

According to the unmanned driving system 10 in the present embodiment described above, it is possible to confirm whether or not remote control is being operated on the intended vehicle 100. In particular, in the present embodiment, it is possible to determine whether or not remote control is being operated on the intended vehicle 100 by using the control command stored in the memory 112 of the vehicle control device 110 and the memory 202 of the remote control device 200 by remote control of the vehicle 100. Further, in the present embodiment, if remote control on the intended vehicle 100 is confirmed, the remote control device 200 starts moving the vehicle 100. If remote control on a vehicle 100 other than the intended vehicle 100 is confirmed, the remote control device 200 deactivates the connection with the vehicle 100 by wireless communication to cancel the movement of the vehicle 100. In this way, it is possible to prevent an unintended vehicle 100 from moving by remote control. Furthermore, in the present embodiment, if remote control on a vehicle 100 other than the intended vehicle 100 is confirmed, the administrator and the like is informed of the occurrence of abnormality using the notification device 400. This allows the administrator and the like to quickly find out that remote control on an unintended vehicle 100 has been confirmed.

Further, when the remote control device 200 performs remote control on a plurality of vehicles 100, it is possible that a control command is transmitted from the communication device 205 to a vehicle 100 that does not correspond to the control command. The "transmission of a control command from the communication device 205 to a vehicle 100 that does not correspond to the control command" here means that a control command generated for remote control of a particular one of the plurality of vehicles 100 is transmitted from the communication device 205 to another vehicle 100 other than the one vehicle 100. Such an event may be referred to as mistaken identification of the vehicle 100 that is subjected to remote control. When the remote control device 200 performs remote control on a plurality of vehicles 100, malfunctions in the unmanned driving system 10 or other human errors by the workers in the factory KJ may result in mistaken identification of the target vehicle 100 subjected to remote control. For example, as shown in Fig. 3A, when the remote control device 200 performs remote control on five vehicles: the vehicle 100E, the vehicle 100D, the vehicle 100C, the vehicle 100B, and the vehicle 100A in this order, it is possible that a control command is transmitted from the communication device 205 to a vehicle 100 that does not correspond to the control command. Specifically, after the remote control device 200 has completed remote control of the vehicle 100E, if the communication device 150 removed from the vehicle 100E is mistakenly attached to the vehicle 100A even though the communication device 150 removed from the vehicle 100E was scheduled to be attached to the vehicle 100B, it is possible that a control command generated for the remote control of the vehicle 100B is transmitted to the vehicle 100A. Even in such a case, according to the present embodiment, the remote control device 200 is capable of detecting the mistaken identification of the vehicle 100 subjected to remote control by performing the confirmation process. Therefore, it is possible to detach the communication device 150 mistakenly attached to the vehicle 100A from the vehicle 100A, and attach it to the vehicle 100B, thereby starting remote control of the vehicle 100B.

### B. Second Embodiment

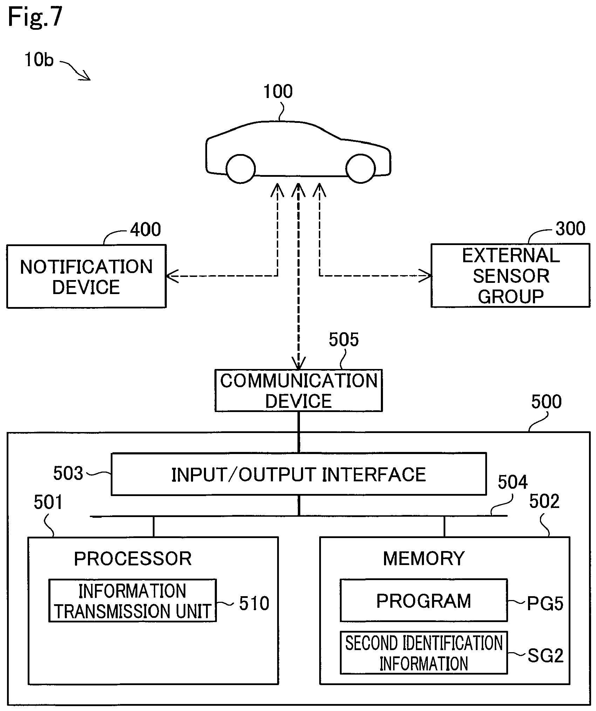

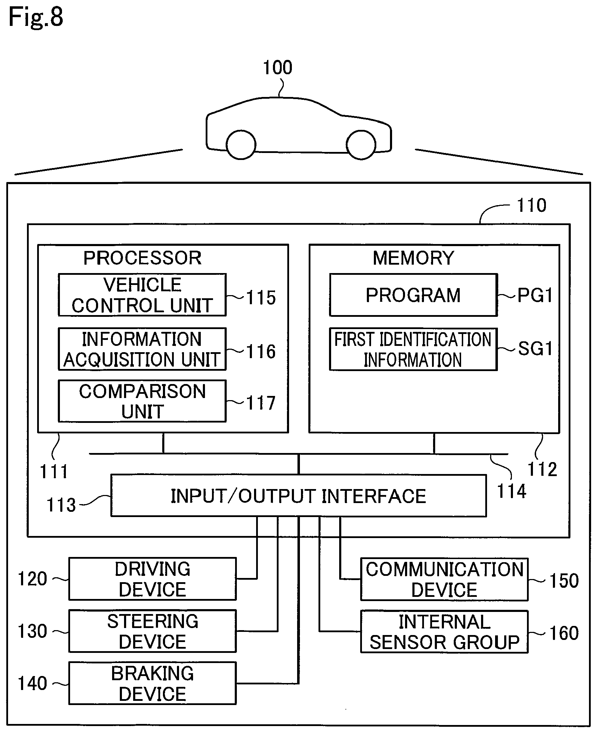

Fig. 7 is an explanatory view of a structure of an unmanned driving system 10b according to a second embodiment. Fig. 8 is an explanatory view of a structure of a vehicle 100 according to the second embodiment. The second embodiment differs from the first embodiment in that the unmanned driving system 10b does not have the remote control device 200, and that the vehicle 100 runs by autonomous control instead of remote control. Other structures are the same as those in the first embodiment, unless otherwise specified. In the present embodiment, the vehicle control device 110 corresponds to the "control device" of the present disclosure.

As shown in Fig. 7, the step management device 500 is constituted of a computer with a processor 501, a memory 502, an input/output interface 503, and an internal bus 504. The processor 501, the memory 502, and the input/output interface 503 are connected via the internal bus 504 to enable bidirectional communication. The input/output interface 503 is connected to a communication device 505 for enabling communication with the vehicle 100 via wireless communication. In the present embodiment, the communication device 505 is capable of communication with various facilities in the factory KJ via wired or wireless communication. The memory 502 stores a computer program PG5 and identification information for each vehicle 100. In the present embodiment, the identification information of the vehicle 100 is a vehicle identification number. In the following description, the identification information stored in the memory 502 is referred to as a second identification information SG2. The processor 501 functions as an information transmission unit 510 by executing the computer program PG5. The information transmission unit 510 transmits the second identification information SG2 stored in the memory 502 to the vehicle 100. In the present embodiment, the memory 502 corresponds to the "second storage unit" of the present disclosure, and the second identification information SG2 corresponds to the "second authentication information" of the present disclosure.

As shown in Fig. 8, in the present embodiment, the vehicle 100 is configured to be capable of running by autonomous control. The vehicle 100 is capable of communication with the external sensor group 300, the notification device 400, and the step management device 500 via wireless communication using the communication device 150. The computer program PG1, the reference route RR, the detection model DM, and identification information of own vehicle are stored in the memory 112 of the vehicle control device 110 in advance. In the following description, the identification information stored in the memory 112 is referred to as a first identification information SG1. The processor 111 functions as the vehicle control unit 115, an information acquisition unit 116, and a comparison unit 117 by executing the computer program PG1 stored in the memory 112. The information acquisition unit 116 acquires the first identification information SG1 stored in the memory 112 of the own vehicle and acquires the second identification information SG2 from outside of the own vehicle. In the present embodiment, the information acquisition unit 116 acquires the second identification information SG2 from the step management device 500. The comparison unit 117 compares the first identification information SG1 with the second identification information SG2 to determine if they match each other. In the present embodiment, the vehicle control unit 115 may be simply referred to as a control unit. In the present embodiment, the memory 112 corresponds to the "first storage unit" of the present disclosure, and the first identification information SG1 corresponds to the "first authentication information" of the present disclosure.

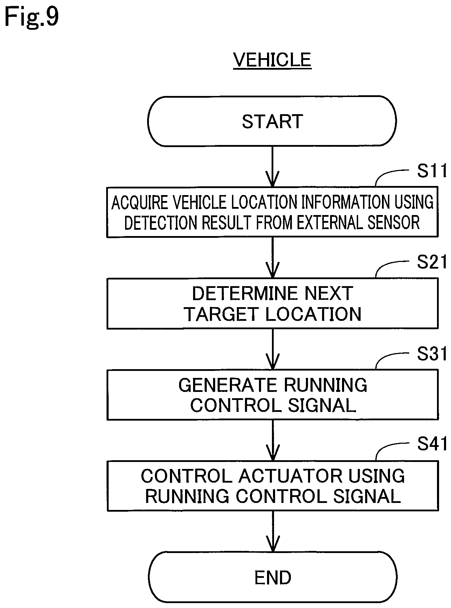

FIG. 9 is a flowchart showing a processing procedure for running control of the vehicle 100 in the present embodiment. In step S11, the vehicle control device 110 acquires vehicle location information using detection result output from the camera CM as the external sensor. In step S21, the vehicle control device 110 determines a target location to which the vehicle 100 is to move next. In step S31, the vehicle control device 110 generates a running control signal for causing the vehicle 100 to run to the determined target location. In step S41, the vehicle control device 110 controls the driving device 120, the steering device 130, and the braking device 140 using the generated running control signal, thereby causing the vehicle 100 to run by following a parameter indicated by the running control signal. The vehicle control device 110 repeats the acquisition of vehicle location information, the determination of a target location, the generation of a running control signal, and the control over the various devices 120 to 140 in a predetermined cycle.

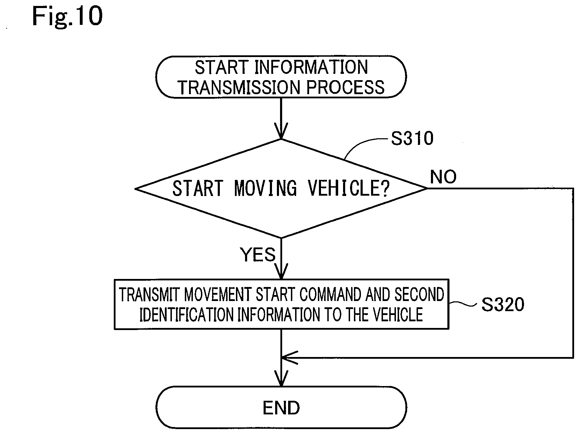

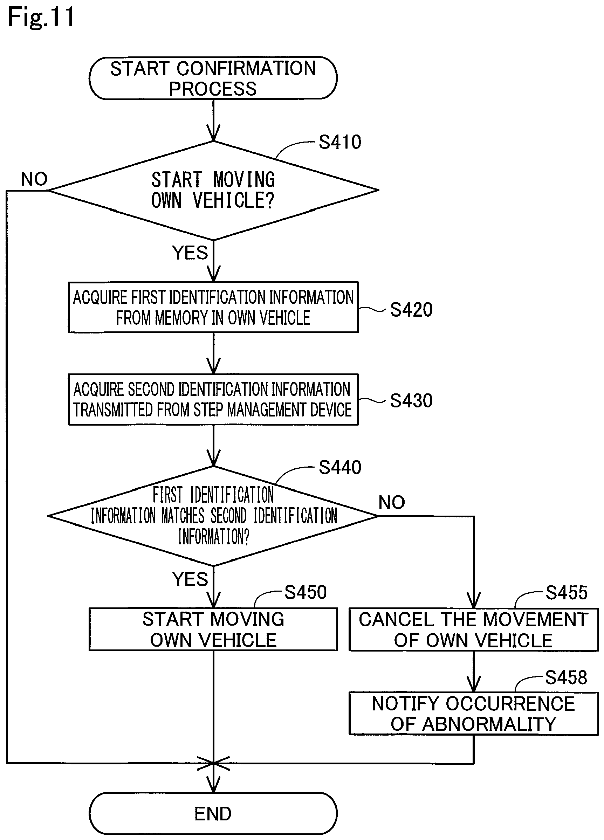

Fig. 10 is a flowchart of contents of an information transmission process performed in the step management device 500. Fig. 11 is a flowchart of contents of a confirmation process performed in the vehicle control device 110. The following describes a control method performed in the unmanned driving system 10b with reference to Fig. 10 and Fig. 11.

The information transmission process shown in Fig. 10 is repeated by the processor 501 of the step management device 500. When the information transmission process is started, in the step S310, the information transmission unit 510 determines whether or not to start moving the vehicle 100. The step management device 500 keeps track of the production status of the vehicle 100 in the factory KJ. The step management device 500 determines whether or not to start moving the vehicle 100 according to the production status. For example, when the vehicle 100 is transported to the starting point in the first place PL1, the step management device 500 starts moving the vehicle 100 from the first place PL1 to the second place PL2. The step management device 500 may start moving the vehicle 100 from the second place PL2 to the third place PL3 when the inspections at the second place PL2 are completed. If it is not determined in the step S310 that the vehicle 100 is to be started moving, the information transmission unit 510 skips the processes after the step S410 and ends the information transmission process. If it is determined in the step S410 that the vehicle 100 is to be started moving, in the step S420, the information transmission unit 510 transmits to the vehicle 100 a command to start moving as well as the second identification information SG2 of the vehicle 100. The step management device 500 then completes the information transmission process.

The confirmation process shown in Fig. 11 is repeated by the processor 111 of the vehicle control device 110. When the confirmation process is started, in the step S410, the vehicle control unit 115 determines whether or not to start moving the own vehicle by autonomous control. In the present embodiment, the vehicle control unit 115 determines to start moving the own vehicle when a command to start moving is received from the step management device 500. If it is not determined in the step S410 that the own vehicle is to be started moving, the vehicle control unit 115 skips the processes after the step S410 and ends the confirmation process.

If it is determined in the step S410 that the own vehicle is to be started moving, in the step S420, the information acquisition unit 116 acquires the first identification information SG1 from the memory 112 of the own vehicle. In the step S430, the second identification information SG2 transmitted with the movement command from the step management device 500 is acquired. The process in the step S430 may be performed between the step S410 and the step S420.

In the step S440, the comparison unit 117 compares the first identification information SG1 with the second identification information SG2 to determine if they match each other. If it is determined in the step S440 that the first identification information SG1 and the second identification information SG2 match each other, in the step S450, the vehicle control unit 115 starts moving the own vehicle 100 by autonomous control. The vehicle control device 110 then completes the confirmation process. In contrast, if it is determined in the step S440 that the first identification information SG1 and the second identification information SG2 do not match each other, in the step S455, the vehicle control unit 115 cancels the movement of the own vehicle by autonomous control. In the step S458, the vehicle control unit 115 performs notification of the occurrence of abnormality using the notification device 400. The vehicle control device 110 then completes the confirmation process. The process in the step S458 may be performed between the step S440 and the step S455.

According to the unmanned driving system 10b in the present embodiment described above, the vehicle 100 can be made run by autonomous control of the vehicle 100 without operating the vehicle 100 from outside. In addition, in the present embodiment, performing the confirmation process allows the vehicle 100 to confirm that the movement command received from the step management device 500 is a command intended to move the own vehicle.

### C. Alternative Embodiments

(C1) In the unmanned driving system 10 of the first embodiment described above, the first history information LG1 and the second history information LG2 relate to control commands. Optionally, the first history information LG1 and the second history information LG2 may be information regarding history of operation of the vehicle 100 other than control commands. Examples of the information regarding the operation history of the vehicle 100 other than control commands include, for example, information indicating the following (a) to (c).
(a) Moving trajectory of the vehicle 100 The moving trajectory may be expressed by a line or a plurality of points.
(b) Position information of passing point of the vehicle 100 and the time of passing the passing point
(c) Position information of stopping point of the vehicle 100 and the time of stopping at the stopping point

The first history information LG1 and the second history information LG2 may be information regarding the measurement results of the internal sensor group 160 in the vehicle 100 under remote control. Examples of the information regarding the measurement results of the internal sensor group 160 in the vehicle 100 under remote control include, for example, information indicating the following (d) to (e).
(d) Time series data of the rotation count of the driving motor mounted on the vehicle 100 The time series data of the rotation count may express changes in rotation count continuously or express them discretely.
(e) Time series data of moving speed of the vehicle 100 The time series data of the moving speed may express changes in moving speed continuously or express them discretely.

The first history information LG1 and the second history information LG2 may be information regarding history of warnings or errors in the vehicle 100 under remote control. Examples of the information regarding history of warnings or errors in the vehicle 100 under remote control include, for example, information indicating the following (f) to (g).
(f) Content of error message and the time the error occurred
(g) Position information of the stopping point where the vehicle 100 stopped due to an error and the time the vehicle stopped due to the error Regardless of the presence or absence of an error, the information may have the position information of the last stopping point where the vehicle 100 stopped and the time of the stopping.

The first history information LG1 and the second history information LG2 may be information regarding production history of the vehicle 100. Examples of the information regarding production history of the vehicle 100 include, for example, information indicating the following (h).
(h) Time at which a predetermined component is attached to the vehicle 100

The first history information LG1 and the second history information LG2 may be information in which at least two items of the information (a) to (h) above and the information regarding control commands are combined.

(C2) In the unmanned driving system 10 of the first embodiment described above, the comparison unit 230 compares the first history information LG1 with the second history information LG2 in the confirmation process. Optionally, the comparison unit 230 may perform the comparison using the identification information of the vehicle 100 in the confirmation process. Examples of the identification information of the vehicle 100 include, for example, the following information (p) to (q). The identification information stored in the memory 112 of the vehicle control device 110 may be referred to as the first identification information, and the identification information stored in the memory 202 of the remote control device 200 may be referred to as the second identification information.
(p) Vehicle identification number
(q) Vehicle body number

In the confirmation process, the comparison unit 230 may perform the comparison using information regarding at least one of the exterior feature and the performance feature of the vehicle 100. Examples of the information regarding exterior feature of the vehicle 100 include, for example, information indicating the following (r) to (s).
(r) Body color of the vehicle 100
(s) Tire size of the vehicle 100

Examples of the information regarding performance feature of the vehicle 100 include, for example, information indicating the following (t).
(t) Output power of the driving motor

The information regarding at least one of the exterior feature and the performance feature of the vehicle 100 is referred to as specification information, and the specification information stored in the memory 112 of the vehicle control device 110 may be referred to as first specification information, and the specification information stored in the memory 202 of the remote control device 200 may be referred to as second specification information. The first specification information and the second specification information may be a combination of at least two items of (s) to (t) above. In this case, for example, when the vehicles 100 are moved by remote control in a mixed production line where different types of vehicles 100 are produced on the same production line, it is possible to confirm whether or not the remote control is operated with respect to the intended vehicle 100. The first specification information may be referred to as the first authentication information, and the second specification information may be referred to as the second authentication information. The first authentication information may be a combination of at least two of the first history information LG1, the first identification information and the first specification information. The second authentication information may be a combination of at least two of the second history information LG2, the second identification information and the second specification information.
(C3) In the unmanned driving system 10b of the second embodiment described above, the comparison unit 117 compares vehicle identification information in the confirmation process. Optionally, the comparison unit 117 may perform the comparison using the information described in (a) to (t) above in the confirmation process.
(C4) In the unmanned driving systems 10 and 10b in the embodiments described above, the remote control unit 210 and the vehicle control unit 115 notify the occurrence of abnormality using the notification device 400 located outside the vehicle 100. Optionally, the remote control unit 210 and the vehicle control unit 115 may notify the occurrence of abnormality by sounding the horn of the vehicle 100 or by flashing the headlamps of the vehicle 100.
(C5) In the unmanned driving system 10 of the first embodiment described above, the information acquisition unit 220 and the comparison unit 230 are provided in the remote control device 200. Optionally, the information acquisition unit 220 and the comparison unit 230 may be provided in the vehicle control device 110. In this case, the vehicle control device 110 may be simply referred to as a control device, and the vehicle control unit 115 may be simply referred to as a control unit. If, as a result of the comparison by the comparison unit 230 provided in the vehicle control device 110, it is determined that the first history information LG1 and the second history information LG2 match each other, the vehicle control unit 115 starts the process of causing the vehicle 100 to run in accordance with the control command transmitted from the remote control device 200, and if it is determined that the first history information LG1 and the second history information LG2 do not match, at least one of a process to notify the occurrence of abnormality and a process to stop the remote control is performed. In the process of notifying the occurrence of abnormality, the vehicle control unit 115 may, for example, notify the administrator and the like of the occurrence of abnormality using the notification device 400 located outside the vehicle 100, or may notify the workers and the like near the vehicle 100 of the occurrence of abnormality by sounding the horn mounted on the vehicle 100. In the process of stopping remote control, the vehicle control unit 115 stops the remote control by, for example, cutting off the communication with the remote control device 200.
(C6) In the unmanned driving system 10 of the first embodiment described above, the second history information LG2 is stored in the memory 202 of the remote control device 200. Optionally, the second history information LG2 may be stored in a storage device located outside the remote control device 200. In this case, the information acquisition unit 220 acquires the second history information LG2 from the storage device described above.
(C7) In the unmanned driving system 10b of the second embodiment described above, the second identification information SG2 is stored in the memory 502 of the step management device 500. Optionally, the second identification information SG2 may be stored in a storage device located outside the step management device 500. In this case, the information acquisition unit 116 acquires the second identification information SG2 from the storage device described above.
(C8) In the unmanned driving systems 10 and 10b in the embodiments described above, the comparison unit 230/117 compares the two items of information before the vehicle 100 starts moving, and the remote control unit 210 and the vehicle control unit 115 perform different processes regarding the movement of the vehicle 100 according to the results of the comparison. Optionally, the comparison unit 230/117 may compare the two items of information while the vehicle 100 is moving. The remote control unit 210 and the vehicle control unit 115 may perform different processes regarding the movement of the vehicle 100 according to the results of the comparison. In this case, in the steps S160 and S450 of the confirmation process, the remote control unit 210 and the vehicle control unit 115 may continue moving the vehicle 100. In the steps S168 and S458 of the confirmation process, the remote control unit 210 and the vehicle control unit 115 may stop the movement of the vehicle 100. In the steps S168 and S458 of the confirmation process, the remote control unit 210 and the vehicle control unit 115 may change the running speed of the vehicle 100, for example, by slowing the vehicle 100 without stopping the movement of the vehicle 100, or may lower the upper limit of the running speed of the vehicle 100 without slowing the target vehicle 100.
(C9) In the unmanned driving system 10 of the first embodiment described above, if the comparison unit 230 determines that the first history information LG1 and the second history information LG2 do not match in the step S150 of the confirmation process, it is possible to perform identification of the vehicle 100 having the first history information LG1 that matches the second history information LG2, instead of or in addition to the steps S165 and S168.
(C10) In the unmanned driving systems 10 and 10b in the embodiments described above, the external sensor is not limited to the camera but may be the distance measuring device, for example. The distance measuring device is a light detection and ranging (LiDAR) device, for example. In this case, detection result output from the external sensor may be three-dimensional point cloud data representing the vehicle 100. The remote control device 200 and the vehicle 100 may acquire the vehicle location information through template matching using the three-dimensional point cloud data as the detection result and reference point cloud data, for example.
(C11) In the unmanned driving system 10 of the first embodiment described above, the remote control device 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
   (1) The remote control device 200 may acquire vehicle location information, determine a target location to which the vehicle 100 is to move next, and generate a route from a current location of the vehicle 100 indicated by the acquired vehicle location information to the target location. The remote control device 200 may generate a route to the target location between the current location and a destination or generate a route to the destination. The remote control device 200 may transmit the generated route to the vehicle 100. The vehicle 100 may generate a running control signal in such a manner as to cause the vehicle 100 to run along the route received from the remote control device 200 and control the driving device 120, the steering device 130, and the braking device 140 using the generated running control signal.
   (2) The remote control device 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the driving device 120, the steering device 130, and the braking device 140 using the generated running control signal.
   (3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the remote control device 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.
(C12) In the unmanned driving system 10b of the second embodiment described above, the vehicle 100 may be equipped with an internal sensor, and detection result output from the internal sensor may be used in at least one of generation of a route and generation of a running control signal. For example, the vehicle 100 may acquire detection result from the internal sensor, and in generating the route, may reflect the detection result from the internal sensor in the route. The vehicle 100 may acquire detection result from the internal sensor, and in generating the running control signal, may reflect the detection result from the internal sensor in the running control signal.
(C13) In the unmanned driving system 10b of the second embodiment described above, the vehicle 100 acquires vehicle location information using detection result from the external sensor. By contrast, the vehicle 100 may be equipped with an internal sensor, the vehicle 100 may acquire vehicle location information using detection result from the internal sensor, determine a target location to which the vehicle 100 is to move next, generate a route from a current location of the vehicle 100 indicated by the acquired vehicle location information to the target location, generate a running control signal for running along the generated route, and control the driving device 120, the steering device 130, and the braking device 140 of the vehicle 100 using the generated running control signal. In this case, the vehicle 100 is capable of running without using any detection result from the external sensor. The vehicle 100 may acquire target arrival time or traffic congestion information from outside the vehicle 100 and reflect the target arrival time or traffic congestion information in at least one of the route and the running control signal. The functional configuration of the unmanned driving systems 10 and 10b may be entirely provided at the vehicle 100. Specifically, the processes realized by the unmanned driving systems 10 and 10b in the present disclosure may be realized by the vehicle 100 alone.
(C14) In the first embodiment described above, the remote control device 200 automatically generates the running control signal, which is transmitted to the vehicle 100. Optionally, the remote control device 200 may generate the running control signal, which is transmitted to the vehicle 100, according to an operation by an external operator located outside the vehicle 100. For example, the external operator may operate an operating device equipped with a display for displaying captured images output from the camera CM, which is an external sensor, a steering wheel, an accelerator pedal, and a brake pedal for enabling remote control of the vehicle 100, and a communication device for enabling communication with the remote control device 200 via wired or wireless communication, and the remote control device 200 may generate the running control signal in response to the operation made on the operating device. In this embodiment, the first history information LG1 and the second history information LG2 may be displayed on a display of an operating device, and the comparison of the first history information LG1 and the second history information LG2 may be performed by visual confirmation by an operator.
(C15) In each of the above-described embodiments, the vehicle 100 is simply required to have a configuration to become movable by unmanned driving. The vehicle 100 may embodied as a platform having the following configuration, for example. The vehicle 100 is simply required to include at least the vehicle control device 110, the driving device 120, the steering device 130, and the braking device 140 in order to fulfill three functions including "run," "turn," and "stop" by unmanned driving. In order for the vehicle 100 to acquire information from outside for unmanned driving, the vehicle 100 is simply required to include the communication device 150 further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from the factory KJ, or a remaining component such as a bodyshell may be mounted on the vehicle 100 after the vehicle 100 is shipped from the factory KJ while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.
(C16) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.
(C17) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.
(C18) The control and the method described in the present disclosure may be realized by a dedicated computer provided by configuring a processor and a memory programmed in such a manner as to implement one or a plurality of functions embodied by a computer program. Alternatively, the controller and the method described in the present disclosure may be realized by a dedicated computer provided by configuring a processor using one or more dedicated hardware logic circuits. Still alternatively, the controller and the method described in the present disclosure may be realized by one or more dedicated computers configured using a combination of a processor and a memory programmed in such a manner as to implement one or a plurality of functions, and a processor configured using one or more hardware logic circuits. The computer program may be stored as an instruction to be executed by a computer into a computer-readable tangible non-transitory recording medium.

The disclosure is not limited to any of the embodiment and its modifications described above but may be implemented by a diversity of configurations without departing from the scope of the disclosure. For example, the technical features of any of the above embodiments and their modifications may be replaced or combined appropriately, in order to solve part or all of the problems described above or in order to achieve part or all of the advantageous effects described above. Any of the technical features may be omitted appropriately unless the technical feature is described as essential in the description hereof.

## Claims

1. A control device (200;110), comprising:
an information acquisition unit (220;116) configured to acquire a first information (LG1 ;SG1) and a second information (LG2;SG2), wherein the first information is stored in a first storage unit (112), wherein the first storage unit is located in a moving object (100) operable by unmanned driving, wherein the first information includes at least one of operation history of the moving object and a feature of the moving object, wherein the second information is stored in a second storage unit (202), wherein the second storage unit is located outside the moving object, wherein the second information includes at least one of operation history of the moving object and a feature of the moving object;
a comparison unit (230;117) configured to compare the first information with the second information; and
a control unit (210;115) configured to perform different processes regarding the moving object depending on whether or not the first information matches the second information.

2. The control device according to claim 1, wherein
when the first information and the second information do not match, the control unit performs at least one of a process of notifying occurrence of abnormality, a process of changing a speed of the moving object, and a process of stopping unmanned driving of the moving object.

3. The control device according to claim 1, wherein
the moving object acts according to a control commands received from outside the moving object, and
the first information and the second information include history of the control commands transmitted to the moving object.

4. The control device according to claim 1, wherein
the first information and the second information include at least one of an exterior feature of the moving object and a performance feature of the moving object.

5. A control method, comprising
acquiring a first information (LG1;SG1) and a second information (LG2;SG2), wherein the first information is stored in a first storage unit (112), wherein the first storage unit is located in a moving object (100) operable by unmanned driving, wherein the first information includes at least one of operation history of the moving object and a feature of the moving object, wherein the second information is stored in a second storage unit (202), wherein the second storage unit is located outside the moving object, wherein the second information includes at least one of operation history of the moving object and a feature of the moving object;
comparing the first information with the second information; and
performing different processes regarding the moving object depending on whether or not the first information matches the second information.
